# EUROPEAN PATENT APPLICATION

(11) **EP 4 749 797 A1**
(43) Date of publication of application: **27.05.2026**
(21) Application number: 24842125.7
(22) Date of filing: 14.06.2024
(51) Int. Cl.: H01M 50/417, H01M 50/403, H01M 10/0525, H01M 50/491, H01M 50/489, H01M 50/497

(54) **EXTREMELY THIN AND HIGH-STRENGTH LITHIUM ION BATTERY SEPARATOR AND PREPARATION METHOD THEREFOR**

(30) Priority: 18.07.2023 CN 202310878315
(71) Applicant: HEBEI GELLEC NEW ENERGY SCIENCE & TECHNOLOGGY CO., LTD, Handan, Hebei 057150 (CN)
(72) Inventor: YUAN, Haichao, Handan, Hebei 057150 (CN); XU, Feng, Handan, Hebei 057150 (CN); CHANG, Hongxiang, Handan, Hebei 057150 (CN); MA, Wenxian, Handan, Hebei 057150 (CN)
(74) Representative: Bryn Aarflot AS
(86) International application number: PCT/CN2024/099279
(87) International publication number: WO 2025/016126

(57) **Abstract**

Provided are an ultra-thin high-strength lithium-ion battery separator and a preparation method therefor. The preparation method for the ultra-thin high-strength lithium-ion battery separator includes the following steps: mixing a nucleating agent, ultra-high molecular weight polyethylene powder, an antioxidant and a pore-forming agent, and stirring uniformly to obtain a premixed raw material; injecting the premixed raw material into an extruder, heating to obtain a thermodynamic single-phase melt, and carrying out melt casting on the thermodynamic single-phase melt to obtain a crystalline cast strip, where a ratio of a linear speed of a chill roll in the melt casting to a flow rate of the thermodynamic single-phase melt during the melt casting is 5-50; and carrying out machine-direction stretching and first transverse-direction stretching on the crystalline cast strip, extracting and washing, drying, and carrying out second transverse-direction stretching, shrinkage and heat setting to obtain an ultra-thin high-strength lithium-ion battery separator.

## Description

### TECHNICAL FIELD

The present disclosure belongs to the technical field of batteries, and in particular to an ultra-thin high-strength lithium-ion battery separator and a preparation method therefor.

### BACKGROUND

The lithium-ion battery separator is a vital component of lithium battery, which, as an insulating layer, provides a channel for migration of lithium ions while playing a role in isolating anode and cathode materials in the battery. With the innovation iteration of preparation technologies for the separator, the thin and light and functionalization of the separator have become the mainstream development trend. The thinner the lithium-ion battery separator, the smaller the internal resistance, the higher the ionic conductivity, and the smaller the volume space occupied in the lithium-ion battery, which is most in line with the adaptation requirements of high-rate and high-capacity lithium batteries for the separator. However, the gradual thinning of the thickness of the separator in the process of thinning makes the puncture resistance strength lower and the safety worse, and causes serious safety accidents at the battery application end, which is a crucial bottleneck problem. At present, the thickness of mainstream products in the separator industry is 7-12 µm, and the separators with a thickness less than 7 µm are called ultra-thin separators. The needle puncture strength of the ultra-thin separator is particularly low, which is below 3 N, and the unit micron strength is within 0.5 N/µm. Therefore, how to break through the strength bottleneck of the ultra-thin separator is the only way to achieve the thinning of the separator.

### SUMMARY

For the disadvantages in the prior art, an objective of the present disclosure is to provide an ultra-thin high-strength lithium-ion battery separator.

Another objective of the present disclosure is to provide a preparation method for the ultra-thin high-strength lithium-ion battery separator. According to the preparation method, double improvement of the crystallinity of the product is achieved by high-ratio stretching of melt casting and the addition of a nucleating agent, and the thinning of the thickness of the battery separator is initially achieved.

The objective of the present disclosure is implemented through the following technical solutions:

An ultra-thin high-strength lithium-ion battery separator is prepared from a nucleating agent, ultrahigh molecular weight polyethylene powder, an antioxidant, and a pore-forming agent. In parts by mass, a ratio of the nucleating agent to the ultrahigh molecular weight polyethylene powder to the antioxidant to the pore-forming agent is (0.1-1): (15-35): (0.01-1): (65-85). The nucleating agent is a mixture of pimelic acid and calcium stearate, and in parts by mass, a ratio of the pimelic acid to the calcium stearate is (0.5-4): (1-4.5), preferably (0.8-3.8): (1.2-4.2).

In the above technical solution, in parts by mass, the ratio of the nucleating agent to the ultrahigh molecular weight polyethylene powder to the antioxidant to the pore-forming agent is (0.3-1): (20-30): (0.01-0.05): (73-75).

In the above technical solution, the ultrahigh molecular weight polyethylene powder has a weight-average molecular weight of 4-5 million.

In the above technical solution, the pore-forming agent is white oil, and/or dioctyl terephthalate (DOTP).

In the above technical solution, the antioxidant is tetra[β-(3,5-di-tert-butyl-4-hydroxyphenyl) propanoic acid] pentaerythritol ester (antioxidant 1010).

The preparation method for the ultra-thin high-strength lithium-ion battery separator includes the following steps:

Step 1. A nucleating agent, ultra-high molecular weight polyethylene powder, an antioxidant and a pore-forming agent are mixed, and stirred uniformly to obtain a premixed raw material.

In Step 1, the stirring is carried out at a temperature of 60-110°C and a rotation speed of 40-60 RPM for 20-40 min.

Step 2. The premixed raw material is injected into an extruder, and heated to obtain a thermodynamic single-phase melt. The thermodynamic single-phase melt is subjected to melt casting to obtain a crystalline cast strip, where a ratio of a linear speed of a chill roll in the melt casting to a flow rate of the thermodynamic single-phase melt during the melt casting is 5-50, the unit of the linear speed is m/min, and the unit of the flow rate is m/min.

In Step 2, the heating is carried out for 30-60 s at a temperature of 170-230°C, preferably 170-210°C.

In Step 2, a temperature of the chill roll in the melt casting is 15-25°C.

In Step 2, the extruder is a twin-screw extruder, which has a screw speed of 100-240 RPM, and a screw length-diameter ratio of 56-68.

In Step 2, a temperature of the thermodynamic single-phase melt during the melt casting is 180-220°C.

Step 3. The crystalline cast strip is subjected to machine-direction stretching and first transverse-direction stretching to obtain a thin film, the thin film is extracted, washed and dried to obtain a precursor, and the precursor is subjected to second transverse-direction stretching, retraction and heat setting to obtain an ultra-thin high-strength lithium-ion battery separator.

In Step 3, a stretching ratio of each of the machine-direction stretching and the first transverse-direction stretching is 5-15 times, the machine-direction stretching is to stretch at a speed of 25-250%/s at 80-120°C.

In Step 3, the first transverse-direction stretching is to stretch at a speed of 10-150%/s at 110-140°C.

In Step 3, the extracting and washing are carried out in an extractant at 25-55°C for 60-240 s. The extractant is a dichloromethane solution, and a concentration of dichloromethane in the dichloromethane solution is greater than 99%.

In Step 3, the drying is carried out at a temperature of 40-110°C for 10-40 s.

In Step 3, the second transverse-direction stretching is to stretch to 1.2-2 times at a speed of 2-30%/s at 120-150°C.

In Step 3, the retraction is to carry out heating retraction at a speed of 0.5-5%/s at a temperature of 120-150°C, and a heating retraction ratio is 5-25%.

In Step 3, the heat setting is carried out at a temperature of 80-120°C for 5-50 s.

Compared with the prior art, the present disclosure has the beneficial effects as follows:
1. According to a preparation method for the ultra-thin high-strength lithium-ion battery separator, by using ultra-high molecular polyethylene powder, heterogeneous crystallization of a nucleating agent, and high-ratio stretching by casting, the crystallinity of a thin film is improved by multiple effects, the thinning of the separator is achieved, and thus an ultra-thin high-strength lithium-ion battery separator is prepared.
2. The ultra-thin high-strength lithium-ion battery separator prepared by the present disclosure has a thickness of 0.54-5.26 µm, a porosity of 45.6%-51.5%, an average pore size of 42.1-50.2 nm, ionic conductivity 2.47-3.24 ms/cm, and needle puncture strength of 0.83-1.02 N/µm. Compared with the conventional thin film (Comparative example 1), the ionic conductivity is improved by 1.2 times and more. The needle puncture strength is over 0.8 N/µm, which is improved by 60% and more in comparison with the conventional thin film. Therefore, the separator has both thin and light and safety, and has good application prospects and economic benefits.

### BRIEF DESCRIPTION OF THE DRAWINGS

FIG. 1 is an SEM (Scanning electron microscopy) of the section of an ultra-thin high-strength battery separator prepared according to Embodiment 2;
FIG. 2 is an SEM of the section of an ultra-thin high-strength battery separator prepared according to Embodiment 3.

### DETAILED DESCRIPTION OF THE EMBODIMENTS

The technical solution of the present disclosure is further described below in conjunction with specific embodiments.

%/s is the unit of stretching or retraction speed, indicating a stretching ratio or retraction ratio of a separator at the original size in unit time (1 S).

Heating retraction ratio: the heating retraction ratio=1 minus (size after retraction/original size)

Raw materials involved in the following embodiments and manufacturer information thereof are as follows:
Nucleating agent: a mixture of pimelic acid and calcium stearate, purchased from Chengdu Xiya Chemical Co., Ltd.
Ultrahigh molecular weight polyethylene powder: Korea Petrochemical Ind. Co., Ltd.
Antioxidant: 1010, Rianlon Corporation.
White oil: 50#, Zhejiang CHXIN Oil Technology Co., Ltd.
DOTP: analytically pure, Bluesail Group Co., Ltd.
Instruments involved in the following embodiments and the model information thereof are as follows:
   Separator production line: Korea MZSTER company, with a width of 4 m and a linear speed of 50 m/min.
   Mahr thickness measuring instrument: Model C1216, Mahr Group.
   Analytic balance: Model FA2204, Shanghai Shedrock Co., Ltd.
   Hydropore Porosimeter: Model AAQ-5, Porous Materials Inc.
   Conductivity tester: Model S2021, Chuanyuan Technology (Suzhou) Co., Ltd.
   Puncture strength determinator: SYSTESTER Instruments Co., Ltd.

The implementation principle is as follows: according to the preparation method provided by the present disclosure, heterogeneous crystallization occurs when polyethylene and a pore-forming agent are cooled for phase separation in a casting stage, thus improving the crystallinity of a crystalline cast strip. Meanwhile, when casting a melt, a chill roll is used to stretch the crystalline cast strip at a high stretching ratio, which makes polyethylene molecules arranged regularly in a machine direction to further improve the crystallinity of the crystalline cast strip. The crystallinity of a thin film is improved by multiple effects, the thinning of the separator is achieved, and thus an ultra-thin high-strength lithium-ion battery separator is prepared.

In the technical solution of the present disclosure, in the melt casting process, the thermodynamic single-phase melt is attached to a roll surface of the chill roll in flaky form to obtain a crystalline cast strip. The chill roll is used to stretch the crystalline cast strip at an ultra-high stretching ratio, which makes the polyethylene molecular chains in a melt casting state rapidly arranged regularly in a stretching direction to generate oriented crystallization. In the cooling process of the chill roll, the polyethylene and the pore-forming agent undergo solid-liquid phase separation as the temperature drops below a phase separation temperature line, and the polyethylene forms crystals. The addition of the nucleating agent may accelerate the crystallization of the polyethylene which takes the nucleating agent as a heterogeneous crystal nucleus, and thus the crystallinity of the cast strip is improved. The higher the crystallinity, the greater the strength of the product.

As the compatibility of the pore-forming agent in the extractant is better, the pore-forming agent in the thin film is extracted out, and the extractant is dried and volatilized in a drying chamber. The volume space occupied by the pore-forming agent in the thin film is replaced to form pores.

The second transverse-direction stretching is a low-ratio stretching. Through the dual effects of heating and molecular orientation, the crystallinity of the thin film is further improved, a microporous structure of the thin film is solidified, and the strength of the thin film is increased. In addition, the heating retraction can eliminate internal stress generated in the stretching process thus improving thermal stability of the thin film.

In the following embodiments, the test methods of thickness, porosity, ionic conductivity and needle puncture strength all refer to the Chinese standard "Polyolefin separator for lithium-ion battery" (GB/T 36363-2018). The pore size is tested by using a hydropore porosimeter.

### Embodiment 1 to Embodiment 4

An ultra-thin high-strength lithium-ion battery separator is prepared from a nucleating agent, ultrahigh molecular weight polyethylene powder, an antioxidant, and a pore-forming agent. In parts by mass, a ratio of the nucleating agent to the ultrahigh molecular weight polyethylene powder to the antioxidant to the pore-forming agent is X. The nucleating agent is a mixture of pimelic acid and calcium stearate, and in parts by mass, a ratio of the pimelic acid to the calcium stearate is Y. A weight-average molecular weight of the ultra-high molecular weight polyethylene powder is 400, the pore-forming agent is white oil, the antioxidant is tetra[(3-(3,5-di-tert-butyl-4-hydroxyphenyl) propanoic acid]pentaerythritol ester (antioxidant 1010).

A preparation method for the ultra-thin high-strength lithium-ion battery separator includes the following steps:
Step 1. A nucleating agent, ultra-high molecular weight polyethylene powder, an antioxidant and a pore-forming agent are mixed in a pre-mix stirring tank, and stirred uniformly for 30 min at 70°C and a rotating speed of 50 RPM, thus obtaining a premixed raw material (the ultra-high molecular weight polyethylene powder swells at this time).
Step 2. The premixed raw material is uniformly injected into an inlet of a co-rotating twin-screw extruder with a screw length-diameter ratio of 64 by a pneumatic diaphragm pump, and heated for 45 s at 200°C in the twin-screw extruder at a rotating speed of 170 RPM to obtain a thermodynamic single-phase melt. The thermodynamic single-phase melt at 200°C is extruded out through a T-shaped die head along a melt pipeline for melt casting, and a flaky thermodynamic single-phase melt is attached to a chill roll at 20°C for quenching to obtain a crystalline cast strip. A ratio of a linear speed of the chill roll to a flow rate of the thermodynamic single-phase melt during the melt casting is A, the unit of the linear speed is m/min, and the unit of the flow rate is m/min.
Step 3. The crystalline cast strip is subjected to machine-direction stretching: the crystalline cast strip is dragged along a roller of a machine direction orienter and stretched to 10 times (that is, the stretching ratio is 10 times) at a speed of 100%/s at 110°C to obtain a thinned film highly oriented in a machine direction, Then, the thinned film highly oriented in the machine direction is clamped by a clip of a transverse direction orienter, and then stretched to 10 times (that is, the stretching ratio is 10 times) in an oven at 125°C at a speed of 80%/s, thus obtaining a thin film highly oriented in a transverse direction. The thin film is dragged by an extraction roll and immersed into a dichloromethane solution at 25°C for extracting and washing for 120 s (the concentration of dichloromethane in the dichloromethane solution is greater than 99%), and dragged by a hot roll to a drying chamber to dry at 60°C for 25 s, thus obtaining a precursor. Afterwards, the precursor is clamped by the clip of the transverse direction orienter and stretched to 1.5 times in an oven at 130°C at a speed of 15%/s, then is heated for retraction at 135°C at a speed of 2%/s (retraction in a transverse width) with a heating retraction ration of 15%, (retraction in a transverse width), finally dragged by the hot roll at 100°C for heat treatment for 20 s for heat setting, and dragged by a roller and wound by a wind-up roll to obtain an ultra-thin high-strength lithium-ion battery separator.

**Table 1**

| Embodiment | X | Y | A |
|---|---|---|---|
| Embodiment 1 | 0.4: 25: 0.02: 74.6 | 0.8: 4.2 | 10 |
| Embodiment 2 | 0.8: 25: 0.02: 74.2 | 3.8: 1.2 | 30 |
| Embodiment 3 | 1.2: 25: 0.02: 73.8 | 2.5: 2.5 | 40 |
| Embodiment 4 | 1: 25: 0.02: 74 | 3.8: 1.2 | 50 |

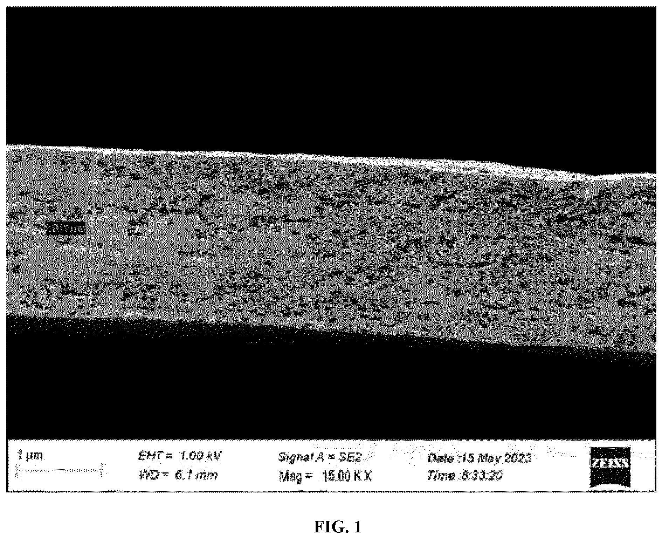

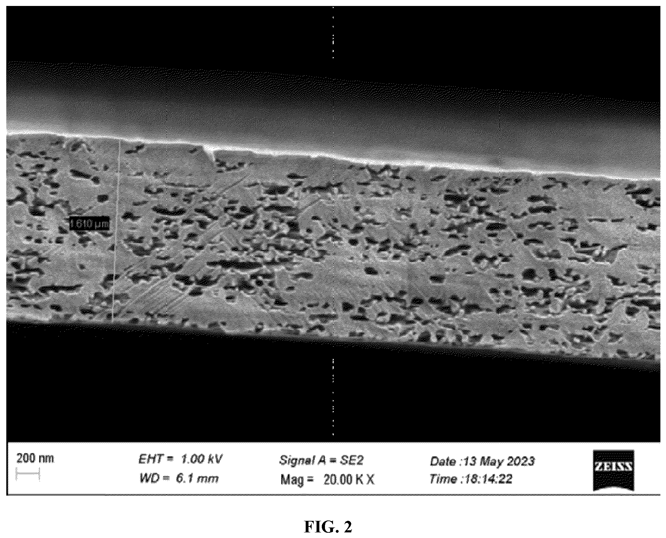

FIG. 1 and FIG. 2 are SEMs of the sections of the ultra-thin high-strength lithium-ion battery separators prepared in Embodiment 2 and Embodiment 3. The adding part by mass of the nucleating agent changes gradually and incrementally from 0.4 to 1.2, and a compounding proportion of the nucleating agent changes step by step from situations that the pimelic acid is less than calcium stearate, the pimelic acid is equal to the calcium stearate and the pimelic acid is greater than the calcium stearate, thus finding out the addition amount and compounding proportion of the nucleating agent with maximum crystallinity.

### Comparative example 1

A lithium-ion battery separator is prepared from ultrahigh molecular weight polyethylene powder, an antioxidant, and a pore-forming agent. In parts by mass, a ratio of the ultrahigh molecular weight polyethylene powder to the antioxidant to the pore-forming agent is 25: 0.02: 75. A weight-average molecular weight of the ultra-high molecular weight polyethylene powder is 400, the pore-forming agent is white oil, the antioxidant is tetra[β-(3, 5-di-tert-butyl-4-hydroxyphenyl) propanoic acid] pentaerythritol ester (antioxidant 1010).

A preparation method for the lithium-ion battery separator is basically consistent with the preparation method for the ultra-thin high-strength lithium-ion battery separator in Embodiment 1, and the only difference is that in this comparative example, the ratio of the linear speed of the chill roll to the flow rate of the thermodynamic single-phase melt during the melt casting is 1, and there is no nucleating agent in Step 1 in this comparative example.

### Comparative example 2

A lithium-ion battery separator is the same as that in Embodiment 4.

A preparation method for the lithium-ion battery separator is basically consistent with the preparation method for the ultra-thin high-strength lithium-ion battery separator in Embodiment 4, and the only difference is that in this comparative example, the ratio of the linear speed of the chill roll to the flow rate of the thermodynamic single-phase melt during the melt casting is 1.

### Comparative example 3

A lithium-ion battery separator is the same as that in Comparative example 1.

A preparation method for the lithium-ion battery separator is basically consistent with the preparation method for the lithium-ion battery separator in Comparative example 1, and the only difference is that in this comparative example, the ratio of the linear speed of the chill roll to the flow rate of the thermodynamic single-phase melt during the melt casting is 50.

Table 2 shows the thickness, porosity, average pore size, ionic conductivity (test temperature is 25°C) and needle puncture strength characteristics of the ultra-thin high-strength lithium-ion battery separators prepared in Embodiments 1 to 4 and the lithium-ion battery separators prepared in Comparative Examples 1 to 3. The ultra-thin high-strength lithium-ion battery separators prepared in Embodiments 1 to 4 have a thickness of 0.54-5.26 µm, a porosity of 45.6-51.5%, an average pore size of 42.1-50.2 nm, ionic conductivity of 2.47-3.24 ms/cm, and needle puncture strength of 0.83-1.02 N/µm.

As can be seen from Table 2 that with the increase of the ratio of the linear speed of the chill roll to the flow rate of the thermodynamic single-phase melt during the melt casting, the porosity and pore size of the ultra-thin high-strength lithium-ion battery separator increase gradually. The ionic conductivity of the ultra-thin high-strength lithium-ion battery separator increases gradually, which is improved by 1.2 times and more compared with that of a thin film without high-ratio stretching by melt casting. The needle puncture strength is over 0.8 N/µm, which is improved by 60% and more compared with that of the thin film without high-ratio stretching by melt casting. Meanwhile, with the gradual increase of the addition amount of the nucleating agent in the scope of the technical solution, the needle puncture strength of the thin film increases gradually. However, if the addition amount of the nucleating agent exceeds the scope specified by the technical solution of the present disclosure, the needle puncture strength of the thin film decreases significantly, the main reason is that the addition of the nucleating agent can improve the crystalline of the thin film and further improve the strength of the thin film, but when added excessively, the nucleating agent, as a foreign matter in the system, destroys the system equilibrium of a homogeneous melt, which makes the crystallinity of the film smaller and the strength lower.

As can be seen from Comparative examples 1 to 3, when only nucleating agent is added or only high-ratio stretching by melt casting is carried out, the ionic conductivity and needling strength of the product can be improved to some extent, but the improvement is far less than the synergistic effect of the nucleating agent and high-ratio stretching by melt casting.

**Table 2**

| Serial number of base film | Embodiment 1 | Embodiment 2 | Embodiment 3 | Embodiment 4 | Comparative example 1 | Comparative example 2 | Comparative example 3 |
|---|---|---|---|---|---|---|---|
| Thickness (µm) | 5.26 | 2.01 | 1.61 | 0.54 | 9.10 | 7.31 | 3.02 |
| Porosity (%) | 45.6 | 49.2 | 50.4 | 51.5 | 39.6 | 40.2 | 48.3 |
| Average pore size (nm) | 42.1 | 45.7 | 47.8 | 50.2 | 38.5 | 39.0 | 45.3 |
| Ionic conductivity (ms/cm) | 2.47 | 2.98 | 3.06 | 3.24 | 1.11 | 1.25 | 3.03 |
| Needle puncture strength N/µm | 0.83 | 0.87 | 0.81 | 1.02 | 0.49 | 0.61 | 0.79 |

The present disclosure has been described by way of example above, and it should be noted that without departing from the core of the present disclosure, any simple variation, modification or other equivalent replacements that can be made by those skilled in the art without creative labor falls within the scope of protection of the present disclosure.

## Claims

1. An ultra-thin high-strength lithium-ion battery separator, wherein the ultra-thin high-strength lithium-ion battery separator is prepared from a nucleating agent, ultrahigh molecular weight polyethylene powder, an antioxidant, and a pore-forming agent; in parts by mass, a ratio of the nucleating agent to the ultrahigh molecular weight polyethylene powder to the antioxidant to the pore-forming agent is (0.1-1): (15-35): (0.01-1): (65-85); and the nucleating agent is a mixture of pimelic acid and calcium stearate, and in parts by mass, a ratio of the pimelic acid to the calcium stearate is (0.5-4): (1-4.5).

2. The ultra-thin high-strength lithium-ion battery separator according to claim 1, wherein the ultrahigh molecular weight polyethylene powder has a weight-average molecular weight of 4-5 million.

3. The ultra-thin high-strength lithium-ion battery separator according to claim 1 or 2, wherein the pore-forming agent is white oil, and/or dioctyl terephthalate.

4. The ultra-thin high-strength lithium-ion battery separator according to claim 3, wherein the antioxidant is tetra[(3-(3,5-di-tert-butyl-4-hydroxyphenyl) propanoic acid] pentaerythritol ester.

5. A preparation method for the ultra-thin high-strength lithium-ion battery separator according to any one of claims 1 to 4, comprising the following steps:
Step 1: mixing a nucleating agent, ultra-high molecular weight polyethylene powder, an antioxidant, and a pore-forming agent, and stirring uniformly to obtain a premixed raw material;
Step 2: injecting the premixed raw material into an extruder, heating to obtain a thermodynamic single-phase melt, and carrying out melt casting on the thermodynamic single-phase melt to obtain a crystalline cast strip, wherein a ratio of a linear speed of a chill roll in the melt casting to a flow rate of the thermodynamic single-phase melt during the melt casting is 5-50, the unit of the linear speed is m/min, and the unit of the flow rate is m/min; and
Step 3: carrying out machine-direction stretching and first transverse-direction stretching on the crystalline cast strip to obtain a thin film, extracting and washing, and drying to obtain a precursor, and carrying out second transverse-direction stretching, retraction and heat setting on the precursor to obtain an ultra-thin high-strength lithium-ion battery separator.

6. The preparation method according to claim 5, wherein in Step 1, the stirring is carried out at a temperature of 60-110°C and a rotation speed of 40-60 RPM for 20-40 min; and in Step 2, and the extruder is a twin-screw extruder, which has a screw speed of 100-240 RPM, and a screw length-diameter ratio of 56-68.

7. The preparation method according to claim 5, wherein in Step 2, the heating is carried out for 30-60 s at a temperature of 170-230°C, 170-210°C; in Step 2, a temperature of the chill roll in the melt casting is 15-25°C; and
in Step 2, a temperature of the thermodynamic single-phase melt during the melt casting is 180-220°C.

8. The preparation method according to claim 5, wherein in Step 3, a stretching ratio of each of the machine-direction stretching and the first transverse-direction stretching is 5-15 times, the machine-direction stretching is to stretch at a speed of 25-250%/s at 80-120°C, and the first transverse-direction stretching is to stretch at a speed of 10-150%/s at 110-140°C;
in Step 3, the second transverse-direction stretching is to stretch to 1.2-2 times at a speed of 2-30%/s at 120-150°C; and
in Step 3, the retraction is to carry out heating retraction at a speed of 0.5-5%/s at a temperature of 120-150°C, and a heating retraction ratio is 5-25%.

9. The preparation method according to claim 5, wherein in Step 3, the extracting and washing are carried out in an extractant at 25-55°C for 60-240 s; and the extractant is a dichloromethane solution, and a concentration of dichloromethane in the dichloromethane solution is greater than 99%.

10. The preparation method according to claim 5, wherein in Step 3, the drying is carried out at a temperature of 40-110°C for 10-40 s. and
in Step 3, the heat setting is carried out at a temperature of 80-120°C for 5-50 s.

## Amended claims

### Amended claims under Art. 19.1 PCT

1. An ultra-thin high-strength lithium-ion battery separator, wherein the ultra-thin high-strength lithium-ion battery separator is prepared from a nucleating agent, ultrahigh molecular weight polyethylene powder, an antioxidant, and a pore-forming agent; in parts by mass, a ratio of the nucleating agent to the ultrahigh molecular weight polyethylene powder to the antioxidant to the pore-forming agent is (0.1-1): (15-35): (0.01-1): (65-85); and the nucleating agent is a mixture of pimelic acid and calcium stearate, and in parts by mass, a ratio of the pimelic acid to the calcium stearate is (0.5-4): (1-4.5).

2. The ultra-thin high-strength lithium-ion battery separator according to claim 1, wherein the ultrahigh molecular weight polyethylene powder has a weight-average molecular weight of 4-5 million.

3. The ultra-thin high-strength lithium-ion battery separator according to claim 1 or 2, wherein the pore-forming agent is white oil, and/or dioctyl terephthalate.

4. The ultra-thin high-strength lithium-ion battery separator according to claim 3, wherein the antioxidant is tetra[β-(3,5-di-tert-butyl-4-hydroxyphenyl) propanoic acid] pentaerythritol ester.

5. A preparation method for the ultra-thin high-strength lithium-ion battery separator according to any one of claims 1 to 4, comprising the following steps:
Step 1: mixing a nucleating agent, ultra-high molecular weight polyethylene powder, an antioxidant, and a pore-forming agent, and stirring uniformly to obtain a premixed raw material;
Step 2: injecting the premixed raw material into an extruder, heating to obtain a thermodynamic single-phase melt, and carrying out melt casting on the thermodynamic single-phase melt to obtain a crystalline cast strip, wherein a ratio of a linear speed of a chill roll in the melt casting to a flow rate of the thermodynamic single-phase melt during the melt casting is 5-50, the unit of the linear speed is m/min, and the unit of the flow rate is m/min; and
Step 3: carrying out machine-direction stretching and first transverse-direction stretching on the crystalline cast strip to obtain a thin film, extracting and washing, and drying to obtain a precursor, and carrying out second transverse-direction stretching, retraction and heat setting on the precursor to obtain an ultra-thin high-strength lithium-ion battery separator.

6. The preparation method according to claim 5, wherein in Step 1, the stirring is carried out at a temperature of 60-110°C and a rotation speed of 40-60 RPM for 20-40 min; and in Step 2, and the extruder is a twin-screw extruder, which has a screw speed of 100-240 RPM, and a screw length-diameter ratio of 56-68.

7. The preparation method according to claim 5, wherein in Step 2, the heating is carried out for 30-60 s at a temperature of 170-230°C, 170-210°C; in Step 2, a temperature of the chill roll in the melt casting is 15-25°C; and
in Step 2, a temperature of the thermodynamic single-phase melt during the melt casting is 180-220°C.

8. The preparation method according to claim 5, wherein in Step 3, a stretching ratio of each of the machine-direction stretching and the first transverse-direction stretching is 5-15 times, the machine-direction stretching is to stretch at a speed of 25-250%/s at 80-120°C, and the first transverse-direction stretching is to stretch at a speed of 10-150%/s at 110-140°C;
in Step 3, the second transverse-direction stretching is to stretch to 1.2-2 times at a speed of 2-30%/s at 120-150°C; and
in Step 3, the retraction is to carry out heating retraction at a speed of 0.5-5%/s at a temperature of 120-150°C, and a heating retraction ratio is 5-25%.

9. The preparation method according to claim 5, wherein in Step 3, the extracting and washing are carried out in an extractant at 25-55°C for 60-240 s; and the extractant is a dichloromethane solution, and a concentration of dichloromethane in the dichloromethane solution is greater than 99%.

10. The preparation method according to claim 5, wherein in Step 3, the drying is carried out at a temperature of 40-110°C for 10-40 s; and
in Step 3, the heat setting is carried out at a temperature of 80-120°C for 5-50 s.
